# EUROPEAN PATENT APPLICATION

(11) **EP 4 706 851 A1**
(43) Date of publication of application: **11.03.2026**
(21) Application number: 24194090.7
(22) Date of filing: 12.08.2024
(51) Int. Cl.: B23B 5/12, B26D 3/28, B08B 9/02, B08B 9/023, B24B 9/00, B26D 3/16

(54) **PEELING APPARATUS FOR MACHINING OF SURFACES OF PIPES**

(71) Applicant: PF-Schweißtechnologie GmbH, 36304 Alsfeld (DE)
(72) Inventor: Spychalski-Merle, Achim, 36304 Alsfeld (DE)
(74) Representative: Eisenführ Speiser

(57) **Abstract**

A peeling apparatus (10) for at least partially removing an outer circumferential surface (O) of an at least approximately cylindrical body (B), in particular of a cylindrical plastic tube. The peeling apparatus (10) comprises a C-shaped or C-like shaped base body (10), which comprises two free ends (21a, 21b) as well as an inner surface (202) merging into the free ends (21a ,21b) for forming a peripheral opening at the base body (20), wherein the cylindrical body (B) is insertable between the free ends (21a, 21b) and concentrically positionable to a center point of an inner circle predetermined by the inner surface (202) of the base body (20), and wherein at least one outer support (30a, 30b) is arranged at each of the free ends (21a, 21b), which outer support (30a, 30b) is supported on an outer axis and bears against the cylindrical body (B) when the latter is positioned concentric to the center point of the inner circle, with at least one central support (30c) formed on the base body (20) or arranged thereon, spaced from the free ends (21a, 21b) and supported on a central axis. A blade holder (23) is formed on or arranged on the base body (20) and in which a blade (42) can be clamped or is clamped in such a way that the blade (42) projects beyond the inner circle defined by the inner surface (202) and thus at least temporarily contacts or removes the outer circumferential surface (O) of an inserted cylindrical body (B). The blade holder (23) is positioned on the opposite side of the central support (30c) on the base body (20) and is angularly spaced from the central support (30c), such that the blade (42) partially intersects a projection of the central support (30c) extending parallel to the central longitudinal axis (L) of the cylindrical body (B).

## Description

The invention relates to a peeling apparatus as used for machining an outer surface of pipes, in particular in the processing of fluid-conducting plastic pipes, such as polyethylene (PE) pipes of small and medium diameters.

Peeling devices are used for the surface treatment of plastic pipes during installation work. The pipes can become deformed as a result of compressive forces acting on them, for example if they are wound onto roll supports. An oxide layer can also form on the surface of plastic pipes, particularly after prolonged exposure to the weather (especially UV exposure) during downtimes or storage on construction sites, but also as a result of ageing. The deformation and/or the oxide layer is disadvantageous in the fluid-tight connection of pipe sections by means of electrofusion welding or heating element welding, as it prevents uniform melting of the surface and the formation of a homogeneous weld seam during cooling. However, a fluid-tight connection is absolutely essential, especially for pipes carrying water or gas, due to the risk of subsequent leakage and thus the escape of flammable gases. Peeling devices can be used to remove the oxidized surface of the pipe in the section of the pipe joints to be created in order to prepare the surface for the welding process.

The peeling devices known in practice require different machines for different sized pipes. Often peeling devices in general and their main bodies in particular are designed with regard to a specific pipe diameter. Hence the application of the corresponding devices to pipes at a larger range of diameters is not possible. Peeling devices which can be applied to varying pipe diameter often comprise chains or lashing strips in order to mount a corresponding blade unit onto a pipe. However, the corresponding devices are applicable only to large diameter pipes and a trained operator is needed to set them up. During piping installations involving pipes of different diameters an operator is therefore required to use a large number of tools, which is not cost-efficient.

In addition peeling devices often use electric motors to power a rotating peeling blade. The operation of a corresponding device in wet or explosive environments is therefore only possible if additional measures are carried out in order to ensure a safe operation of the devices. The corresponding peeling devices also lead to the formation of a large number of small scale splinters, which have to be collected manually in order to avoid a contamination of the surrounding environment with plastics.

The solutions available are therefore inefficient and/or of unsatisfactory quality in terms of the capital to be invested and represent a potential burden on the environment.

It is the task of the present invention to provide a peeling apparatus which enables manual peeling of a section of a pipe surface in preparation for connecting pipes of small to medium diameters.

The present invention solves the corresponding task by providing a simple, cost-efficient base body which can be applied to a pipe without additional tools and which can be operated without an external power source. In view of the fact that the base body has a simple design, it can be manufactured in an cost-efficient way, like additive manufacturing, and adapted by scaling to different pipe diameters. In addition, the simple design of the body allows an easy and unburden attachment of the rollers and blade.

By providing an operator with a set of various sizes of the base body of the invention, pipes of a broad range of different diameters can be machined without carrying different peeling device by exchanging parts between the different sized base bodies.

The present invention thus makes it possible to prepare the pipe surface for subsequent welding operations in an efficient manner. During operation of the peeling apparatus long plastic splinters are formed which are easy to collect. Thereby, contamination of the environment with plastics can be avoided.

The present invention relates to a manually operated peeling apparatus or peeling device for machining an outer surface of a tubular body as defined in claim 1. The peeling apparatus for at least partially removing an outer circumferential surface of an at least approximately cylindrical body, in particular of a cylindrical plastic tube or pipe, comprises a C-shaped or C-like shaped base body, which comprises two free ends as well as an inner surface merging into the free ends for forming a peripheral opening at the base body. The cylindrical body is insertable between the free ends and concentrically positionable to a center point of an inner circle predetermined by the inner surface of the base body. At least one outer support is arranged at each of the free ends. The at least one outer support is supported on an outer axis and bears against the cylindrical body when the latter is positioned concentric to the centre point of the inner circle. At least one central support is formed on the base body or arranged thereon. The at least one central support is spaced from the free ends and supported on a central axis. A blade holder is formed on or arranged on the base body. In the blade holder a blade can be clamped or is clamped in such a way that the blade projects beyond the inner circle defined by the inner surface and thus at least temporarily contacts or removes the outer circumferential surface of an inserted cylindrical body. The blade holder is positioned on the opposite side of the central support on the base body and is angularly spaced from the central support, such that the blade partially intersects a projection of the central support extending parallel to the central longitudinal axis of the cylindrical body.

In a preferred embodiment, the central axis and/or one or both of the outer axes are tangentially pivoted by a predetermined angle with respect to the inner circle. Thereby, a uniform axial movement of the peeling apparatus, when rotated manually around the central longitudinal axis of the cylindrical body can be achieved. This results in a uniform and continuous contact and partial removal of an outer surface of the pipe to be machined and the blade of the peeling apparatus. The axial movement can be matched with a size of the blade mounted on the peeling apparatus. The central axis and/or one of both of the outer axes can be pivoted at the same angle with respect to the inner circle. Each axes can be pivoted or inclined at a different angle with respect to the inner circle.

In a preferred embodiment, the free ends are formed at the base body in such a way that the base body clasps around the cylindrical body or the inner circle over an angle of more than 180 degrees. By clasping the cylindrical body at an angle of more than 180 degrees, the peeling device can be mounted easily to the cylindrical body, while maintaining its position in the cylindrical body. Depending on the angle over which the base body extends around the cylindrical body, the base body can be designed to be more or less rigid. This can be done by at least partially varying the thickness of the base body in a radial direction.

In a preferred embodiment, the outer supports are formed by at least one outer roller which is rotatably mounted on the outer axis. Preferably the outer supports are formed by two outer rollers mounted on each outer axis on each side of the base body. The outer rollers mounted on each side of the base body can be mounted on one axis extending through the base body. Alternatively, each outer roller can be mounted on a separate axis. The outer axis can be releasably coupled to the base body. The outer axis can be provided by a screw extending through the base body. The outer axis can be fixed to the base body and provided with a thread in order to mount the outer rollers onto the corresponding axis. The outer rollers can comprise a commercially available ball bearing. The outer roller can comprise a commercially available cylindrical roller bearing or any other suitable bearing. In order to provide additional support for the outer axis, the base body can be thickened in radial or longitudinal direction in the proximity of the outer supports.

In a preferred embodiment, the central support is formed on the base body, or is supported thereon, equidistantly from the free ends. Preferably, the position of the central support is selected in correspondence with the position of the blade holder. In order to provide additional support the base body can be thickened in radial or longitudinal direction in the proximity of the central support.

In a preferred embodiment, the central bearing is formed as a central roller, which is rotatably mounted on the central axis mounted in a through opening of the base body. The central axis can be releasably coupled to the base body. The central axis can be provided by a screw extending from the base body. The central axis can be fixed to the base body and provided with a thread in order to mount the central roller onto the corresponding axis. The central roller can comprise a commercially available ball bearing. The central roller can comprise a commercially available cylindrical roller bearing or any other suitable bearing.

In a preferred embodiment, the blade is oriented perpendicular to a peeling direction. Alternatively, the blade can be oriented parallel to the surface of the cylindrical body to be machined. Selectively, an angle between a normal vector extending from the surface of the cylindrical body and the blade can vary between 0 (wherein the blade is mounted parallel to the surface of the cylindrical body) and 90 (wherein the blade is mounted perpendicular to the surface of the cylindrical body). Selectively, the angle can be adjusted by a screw mechanism. Alternatively, wedged plates can be inserted to adjust the angle of the blade. The base body can be provided in conjunction with various blade of different geometries, which allow for the setup of different angles between the blade and the normal vector of an outer surface of the cylindrical body to be machined.

In a preferred embodiment, a contact point of the cutting edge of the blade is spaced from the central axis of the central support, preferably, wherein the cutting edge of the blade is spaced from the central axis of the central support in an direction opposite to the peeling direction. Alternatively, the blade is spaced from the central support in the direction of peeling. The distance between the blade and the central axis of the central support can vary with diameter of the cylindrical bodies to be machined and/or with the size of the blades and/or roller coupled to the base body.

In a preferred embodiment, the cutting edge of the blade is spaced from the central axis of the central support by 0.1mm to 0.3mm. The spacing can be varied in accordance to the size of the base body and/or the size of the blade and/or the size of the outer rollers and/or the size of the central rollers. The spacing can be adjustable by a mechanism.

In a preferred embodiment, the base body as well as the blade holder are formed integral. This allows for a simple manufacturing process of the base body and for an easy assembly of the peeling device.

In a preferred embodiment, the base body and the blade holder are made of plastic material. Preferably the manufacturing process of base body and the blade holder can include additive manufacturing (3D-printing). Selectively the manufacturing process uses a thermoplastic polymer. Preferably the additive manufacturing process includes material extrusion. More preferably the axis configured to mount the central and outer rollers are integrated in the base body, such additional machining of the axis is not necessary. At least portions of the surfaces provided in the base body can include small-scale structures in order to facilitate engagement and rotation of the peeling apparatus by an operator. Friction enhancing materials can be mounted to at least portions of the surfaces. Selectively at least portions of the surfaces can be smooth.

In a preferred embodiment, the outer supports and/or the central support are releasably coupled to the base body. This can be done by mounting the outer and/or central support on a screw, extending through the base body, wherein the supports are axially fixed by self-securing nut. Alternatively, the nut can be secured by a glue in order to prevent loosening of the supports during operation of the peeling apparatus.

In a preferred embodiment the blade is releasably coupled to the blade holder. More preferably, the blade is coupled to the blade holder via a screw. This allows for an easy and quick replacement and/or decoupling of the blade. Thereby, the blade can be exchanged between various base bodies without special equipment. In addition this allows for precise setup of the mounting force applied to the blade. A corresponding setup can allow for a slight inclination of the blade with regard to a surface of the blade holder. Thereby, rotating the peeling apparatus around the central longitudinal axis of the cylindrical body is simplified. Preferably, an opening is provided in the blade holder in order to receive the blade mounting screw. Alternatively, the blade can be coupled to the blade holder via a locking mechanism.

In a preferred embodiment, the base body comprises recesses on the free ends of the base body formed on a surface perpendicular to the inner surface of the base body and configured such that the base body at least partially surrounds the outer supports, preferably, wherein the recesses are formed on the side of the base body on which the blade is mounted. Thereby, the outer supports are protected from entanglement with a splinter formed during the peeling process. Selectively, the central roller can also be partially housed by the base body.

In a preferred embodiment, a system comprises a set of peeling devices, wherein the set of peeling devices comprises a plurality of base bodies of different sizes configured to peel cylindrical bodies of varying outer diameters, and a set of interchangeable blades and supports configured to be releasably mounted to any one of the plurality of base bodies of the set of peeling devices. Thereby, the supports and blades can be easily and quickly interchanged within the set of base bodies. An operator can peel cylindrical bodies of varying diameters by interchanging the supports and blades between the different sized base bodies. Thereby and due to the fact, that different sized base bodies can be made of plastic, no heavy equipment is needed for machining pipes of various diameters. In a further preferred embodiment only a small number of commercially available manual tools are needed to interchange the blade and the supports. In a more preferred embodiment, the same tool can used to interchange the blade and the supports.

### Figures

Fig. 1: a perspective view of a peeling apparatus from below.
Fig. 2: a side view of the peeling apparatus from the side.
Fig. 3: a front view of the peeling apparatus.
Fig. 4: a cutout front view of the peeling apparatus zoomed in on the blade.
Fig. 5: a front view of the peeling apparatus including three cross-sectional views through the outer supports and the central support.

### Description

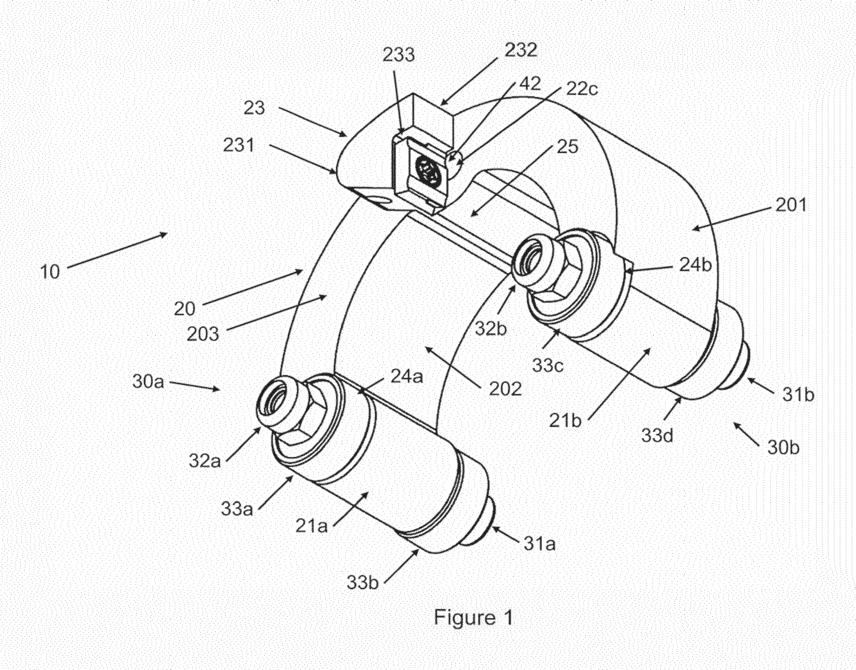

A preferred embodiment of the peeling apparatus is shown in Figs. 1 to 5.

Fig. 1 shows a perspective view of an embodiment of a peeling apparatus or peeling device 10 for machining an outer surface of a cylindrical or tubular body or pipe. Peeling apparatus 10 comprises an integral base unit 20, a peeling blade 42 as well as outer supports 30a, 30b and a central support 30c.

Base body 20 is made from a thermoplastic polymer in conjunction with an additive manufacturing process. 3D-Printing of base body 20 leads to quick production processes. In addition the plastic used for base body 20 features a sufficient elasticity in order to mount peeling apparatus 10 on a pipe to be machined. Thereby, the shape of base body 20 can be kept simple. Due to the material internal thread cutting is not needed when base body 20 is used in conjunction with metal screws. This further accelerates the manufacturing process.

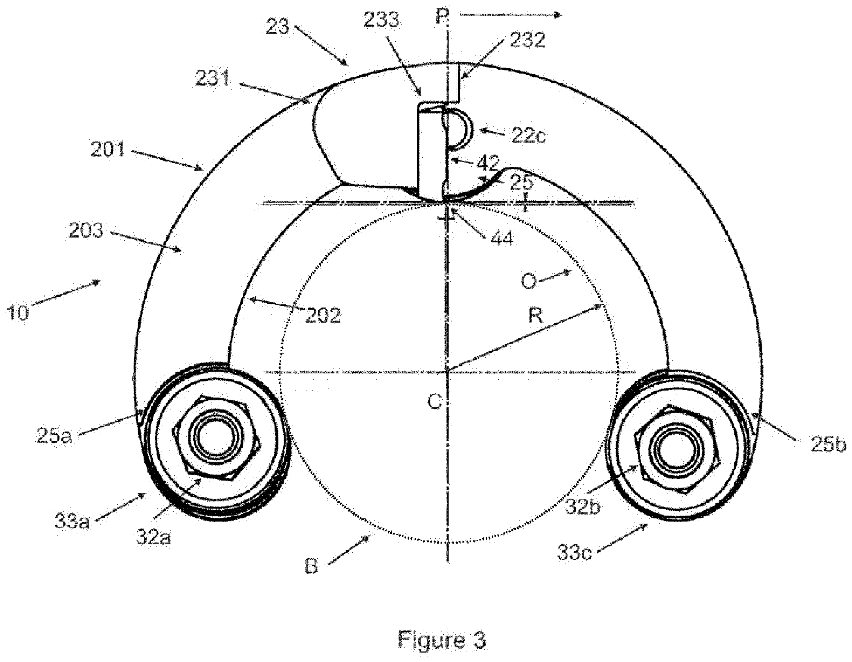

Base body 20 is at least substantially C-shaped and comprises two free end portions 21a, 21b, between which an opening is defined. A substantially cylindrical body, in particular, a cylindrical pipe as shown in Fig. 3 and designated as pipe B, which is of radius R and provides outer surface O to be machined, can be inserted through the opening in order to at least partially an outer surface of the corresponding pipe. Peeling apparatus 10 can be applied on pipes up of diameters ranging from about 15mm up to about 50mm. As soon as a pipe of a matching diameter is inserted the peeling process can be initiated by the operator by turning the peeling device around the central longitudinal axis of the corresponding pipe. During the machining process blade 42 contacts outer surface O of pipe B to be machined and partially removes material from outer surface O. A continuous splinter extending away from the contact between blade 42 and outer surface O is formed depending of the material properties of outer surface O. Once the peeling process is finished peeling apparatus 10 can be removed from the machined pipe.

The stiffness of base body 20 is selected by dimensioning the thickness of base body 20 is radial direction R. In addition the material used during the additive manufacturing process to make base body 20 can be used to adjust the stiffness or rigidity of base body 20. Preferable the stiffness is set such, that peeling device 10 can be mounted pipe B to be machined by application of manual force by an operator in radial direction. Demounting can be achieved by applying force in the opposite direction, such that no additional tools for mounting or demounting are needed.

Base body 20 comprises an inner surface or inner side 202 pointing in the direction of a pipe to be machined as well as an outer surface or outer side 201. In the longitudinal direction, i.e. the direction of the longitudinal axis of pipe to be machined by peeling apparatus 10, base body 20 extends from a front surface or front side 203 to a back surface or back side 204. During operation outer surface 201 is engaged by an operator.

Peeling device 10 comprises three supports 30a, 30b, 30c, which are used to provide a bearing when operating peeling device 10. Each support 30a, 30b, 30c is provided with rollers on a corresponding support axis. Outer supports 30a, 30c are mounted at the free end portions 21a, 21b. Central support 30c is mounted at a mid-portion of base body 20. Outer support 30a is provided with outer rollers 33a, 33b mounted on an axis extending through free end portion 21a. Outer support 30b is provided with outer rollers 33c, 33d mounted on an axis extending through free end portion 21b. Outer rollers 33a, 33c, positioned at the front surface 203 of base body 20 are partially housed within recesses 24a, 24b of base body 20.

Recesses 24a, 24b extend from front surface 203 towards back surface 204 of base body 20. The shape of recess 24a, 24b is substantially circular. Recesses 24a, 24b are sized to at least partially house rollers 33a, 33c. This prevents splinters which emerge during the peeling process to become entangled in rollers 33a, 33b.

For outer rollers 33a, 33b at free end portion 21a an axis of rotation is provided by screw 31a, extending from back side of outer roller 33b through roller 33b, through an opening 22a formed within base body 20 from backside 204 of base body 20 to front side 203 of base body 20 and through outer roller 33a, positioned on front side 203 of base body 20. Correspondingly, for outer rollers 33c, 33d at free end portion 21b an axis of rotation is provided by screw 31b, extending from the back side of outer roller 33d through opening 22b formed within base body 20 to front side 203 of base body 20 mounting outer roller 33c on the front side 203 of base body 20.

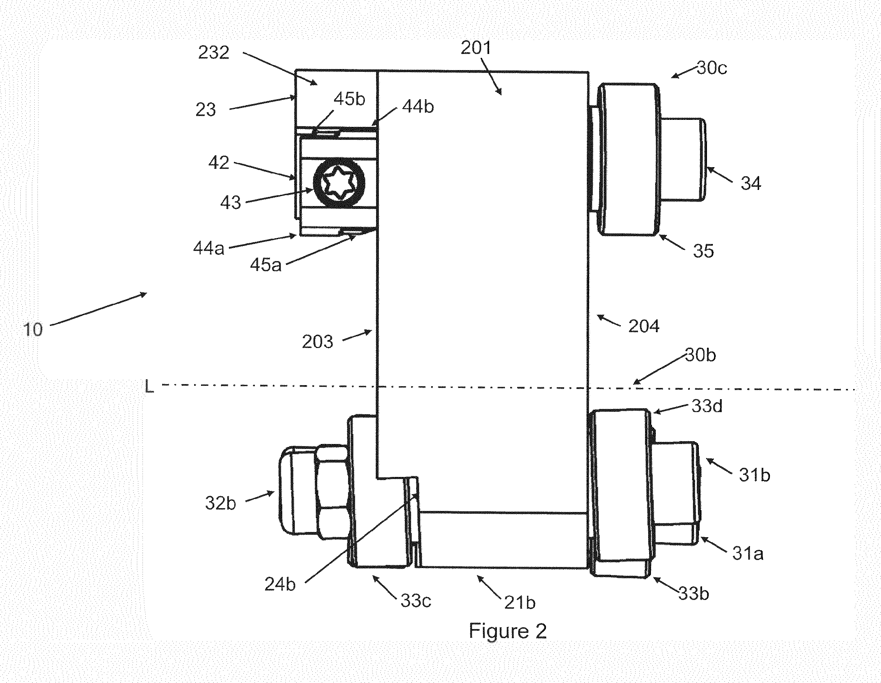

On the front side rollers 33a, 33c are axially fixed onto screws 31a, 31b by nuts 32a, 32b. Nuts 32a, 32b are self-securing nuts, preventing rollers 33a, 33c from loosening during operation of peeling apparatus 10. As can be seen in Figs. 1 and 2, rollers 33d, 33b are axially fixed by backside 204 of base body 20 as well as the heads of screws 31a, 31b. Screws 31a, 31b are coupled to base body 20 due to an interaction between their corresponding thread and openings 22a, 22b provided therefore within base body 20. In the embodiment shown in Figs. 1 to 5, the corresponding openings 22a, 22b are not provided with a thread. A coupling between base body 20 and screws 31a, 31b is obtained by crewing screws 31a, 31b directly into base body 20.

As best shown in Fig. 3 outer rollers 33a-33d and central roller 35 are mounted to base body 20 such that each roller contacts outer surface O of pipe B to be machined. Thereby, peeling device 10 is stabilized in the axial direction L and radial direction R. Outer supports 30a, 30b are positioned such that the angle between outer support 30a and outer support 30b is at least 180 degree with respect to the center C of pipe B to be machined. This ensures a safe mount of peeling device 10 on pipe B. By varying the size of base body 20, the angle between outer support 30a and outer support 30b can be kept constant for pips of varying diameters.

Central support 30c is mounted on a middle portion of base body 20, located between free end portions 21a, 21b. As best shown in Fig. 3, the position of the central support axis, which corresponds to central screw 34 in the embodiment of Figs. 1 to 5, is located on the mid between free end portions 21a, 21b. In other words central support 30c is located radially outward above longitudinal axis L of pipe B to be machined. With regard to the thickness of base body 20, extending in radial direction R of pipe B to be machined, openings 22a, 22b, 22c housing the central support 33c as well as the outer supports 33a, 33b are located in the middle of base body 20, i.e. on a centerline between surface 202 and surface 201. Opening 22c extends from back side 204 to front side 203 of base body 20 and provides a mount for screw 34. Central support 30c comprises a central support axis. In the embodiment shown in Figs. 1 to 5, the central support axis is provided by a screw 34. The head of screw 34 axially secures central roller support 35 to base body 20. Similar to openings 22a, 22b at free end portions 21a, 21b opening 22c provided for screw 34 is not provided with an internal thread during manufacturing of base body 20. In contrast the thread is obtained by mounting screw 34 to opening 22c.

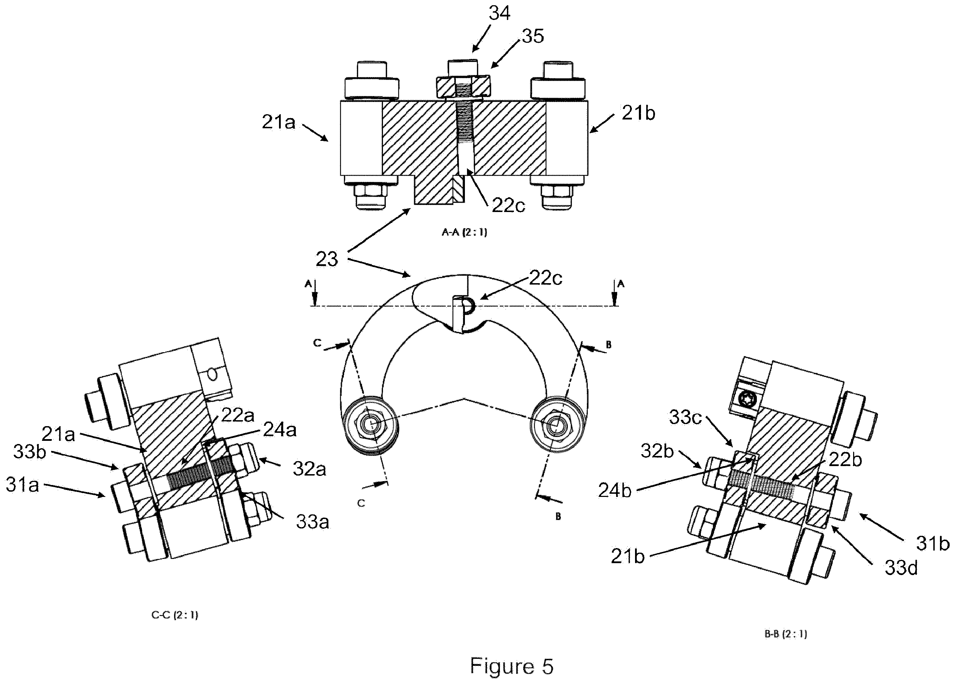

As best shown in Figs. 2 and 5, outer supports 30a, 30b as well as central support 30c are inclined with regard to the longitudinal axis L of pipe B to be machined. The in embodiment shown in Figs. 1 to 5 the inclination is provided by openings 22a, 22b, 22c by tilting their longitudinal axis with respect to the longitudinal axis L of pipe B to be machined. Thereby, peeling device 20 is moving in axial direction when rotated around pipe B to be machined. In other words, if peeling device is rotated around the central longitudinal axis L of pipe B to be machined, blade 42 describes a helical trajectory around the longitudinal axis. The inclination is set such that the axial distance travelled during a 360 degree rotation of peeling device 10 does not exceed the length of a first or second cutting edge 44a, 44b in the direction of the longitudinal axis L. This results in a continuous and uniform peeling. An operator does not need to provide an additional axial force in order to extend the machined surface along longitudinal axis L. In order to ensure, that outer rollers 33a-33d and central roller 35 do not damage base body 20, distance rings (not referenced in Figs. 1 to 5) are inserted between front side 203 and outer rollers 33a, 33c and back side 204 and rollers 33c, 33d, 35.

Blade 42 is mounted at extension 23 of base body 20. Blade 42 comprises first and second cutting or peeling edges 44a, 44b. Each cutting edge 44a, 44b is located at one side of blade 42. In direct proximity to each peeling edge 44a, 44b, a mechanical stop 45a, 45b. As best shown in Fig. 2, cutting edge 44a is located on the opposite side of mechanical stop 45b with respect to blade 42. Blade 42 can be rotated around its central axis, indicated by mounting screw 43. Thereby, peeling apparatus 10 can still be operated if first peeling edge 44a is damaged. First peeling edge 44a and stop member 45a as well as second peeling edge 44b and stop member 45b are about the same in length. Blade 42 is mounted such that the longitudinal edges, comprising no cutting edges, are oriented orthogonal to outer surface O of pipe B to be machined. In other words, blade 42 is mounted orthogonal to outer surface O.

As best seen in Fig. 2, first peeling edge 44a extends further against the radial direction R towards the central longitudinal axis L than mechanical stop 45a. In contrast to cutting edge 44a, 44b, mechanical stop 45a, 45b does not comprise a sharp peeling edge. Therefore mechanical stop 45a, 45b glides of outer surface O of pipe B to be machined. The peeling depth D, which can be defined as thickness of the material removed from an outer surface of pipe B, is set by a mechanical stop 45a, 45b located next to first peeling edge 44a, 44b in conjunction with an offset of blade 42 with respect to outer surface O of pipe B to be machined.

Extension 23 of base body 20 to which blade 42 is mounted, extends from front side 203 of base body 20 in the direction of a longitudinal axis of a pipe to be machined and over the complete front side 203 of base unit 20. Extension 20 is located at the opposite side of central support 30c. In the embodiment shown in Figs. 1 to 5, extension 23 is D-shaped. In the direction of peeling P, opposite a rounded end portion 231 of extension 23 blade 42 is mounted. As best shown in Fig. 2, extension 23 is sized such that blade 42 does not extend past the front surface of extension 23.

A straight surface 232 of extension 23 is provided on the opposite side of rounded end portion 231 featuring a rectangular recess 233 sized and configured to house blade 42. Since blade 42 is partially housed within recess 233 of extension 23 an undesired interaction with blade 42 is prevented. This is of particular importance since blade 42 comprises first peeling edge 44a and a second peeling edge 44b. Peeling edge 44a is in contact with an outer surface of a pipe to be machined. Peeling edge 44b is facing in a direction at which an operator will interact with peeling apparatus 10. Hence, recess 233 in conjunction with surface 232 of extension 23 prevents an operator to get injured by second peeling edge 44b during the use of peeling apparatus 10. A surface of blade 42 facing in direction of backside 204 of base body 20 contacts front surface 203 of base body 20. Thereby, an undesired rotation of blade 42 during operation of peeling device 10 is prevented.

Blade 42 is secured to extension 23 by screw 43. Screw 43 is mounted to an opening provided in extension 23. Screw 43 can be tightened such that blade 42 contacts extension 23 with most of its backside. However, screw 43 can also be loosened in order to allow blade 42 to incline during operation of peeling device 10. Thereby, the forces applied by an operator to rotate peeling device 10 around a longitudinal axis L of pipe B to be machined, can be reduced.

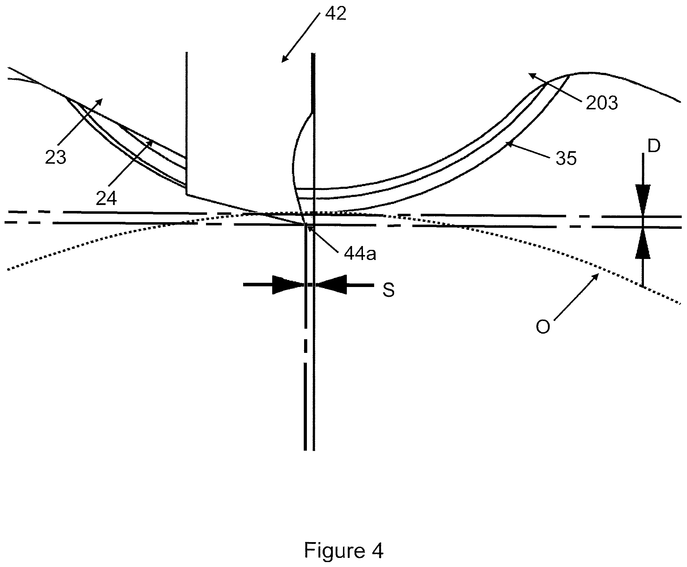

Fig. 4 shows a section of Fig. 3 zoomed in on first cutting edge 44a of blade 42. As can be seen in Fig. 4, first blade edge 44a is positioned below an outer surface O of a pipe R to be machined. Blade 42 extends below the inner radius set by a circle contacting each support 30a, 30b, 30c. In conjunction with mechanical stop 45a, 45b the peeling depth D, defined between the lowest point of first blade edge 44a and the radially outer most point of outer surface O of pipe B to be machined, is set.

In addition to the offset D of first peeling edge 44a in radial direction R with regard to outer surface O of pipe B to be machined, blade 42 is offset against the direction of peeling P with respect to the central support 30c axis by the distance S. In other words, blade 42 partially intersects with central support 30c in general. In particular, blade 42 is arranged such that cutting edge 44a, 44b is offset by the distance S to a horizontal line connecting the center of opening 22c and the center of pipe B to be machined. In the embodiment shown in Fig. 1 to 5, the distance S is set to be 0.1 mm.

## Claims

1. A peeling apparatus (10) for at least partially removing an outer circumferential surface (O) of an at least approximately cylindrical body (B), in particular of a cylindrical plastic tube, the peeling apparatus (10) comprising:
a C-shaped or C-like shaped base body (10), which comprises two free ends (21a, 21b) as well as an inner surface (202) merging into the free ends (21a ,21b) for forming a peripheral opening at the base body (20), wherein the cylindrical body (B) is insertable between the free ends (21a, 21b) and concentrically positionable to a center point of an inner circle predetermined by the inner surface (202) of the base body (20), and wherein at least one outer support (30a, 30b) is arranged at each of the free ends (21a, 21b), which outer support (30a, 30b) is supported on an outer axis and bears against the cylindrical body (B) when the latter is positioned concentric to the center point of the inner circle, with at least one central support (30c) formed on the base body (20) or arranged thereon, spaced from the free ends (21a, 21b) and supported on a central axis,
and with a blade holder (23) which is formed on or arranged on the base body (20) and in which a blade (42) can be clamped or is clamped in such a way that the blade (42) projects beyond the inner circle defined by the inner surface (202) and thus at least temporarily contacts or removes the outer circumferential surface (O) of an inserted cylindrical body (B),
wherein the blade holder (23) is positioned on the opposite side of the central support (30c) on the base body (20) and is angularly spaced from the central support (30c), such that the blade (42) partially intersects a projection of the central support (30c) extending parallel to the central longitudinal axis (L) of the cylindrical body (B).

2. The peeling apparatus (10) according to claim 1, wherein the central axis and/or one or both of the outer axes are tangentially pivoted by a predetermined angle with respect to the inner circle.

3. The peeling apparatus (10) according to any one of claims 1 or 2, wherein the free ends (21a, 21b) are formed at the base body (20) in such a way that the base body (20) clasps around the cylindrical body (B) or the inner circle over an angle of more than 180 degrees.

4. The peeling apparatus (10) according to any one of claims 1 to 3, wherein the outer supports (30a, 30b) are formed by at least one outer roller (33a, 33b, 33c, 33d) which is rotatably mounted on the outer axis, preferably wherein the outer supports (30a, 30b) are formed by two outer rollers (33a, 33b, 33c, 33d) mounted on each outer axis on each side (203, 204) of the base body (20).

5. The peeling apparatus (10) according to any one of claims 1 to 4, wherein the central support (30c) is formed on the base body (20), or is supported thereon, equidistantly from the free ends (21a, 21b).

6. The peeling apparatus (10) according to any one of claims 1 to 5 wherein the central support (30c) is formed as a central roller (35) , which is rotatably mounted on the central axis mounted in a through opening (22c) of the base body (20).

7. The peeling apparatus (10) according to any one of claims 1 to 6, wherein the blade (42) is oriented perpendicular to a peeling direction (P).

8. The peeling device (10) according to any one of claims 1 to 7, wherein a contact point of the cutting edge (44a, 44b) of the blade (42) is spaced from the central axis of the central support (30c), preferably, wherein the cutting edge (44a ,44b) of the blade (42) is spaced from the central axis of the central support (30c) in an direction opposite to the peeling direction (P).

9. The peeling device (10) according to claim 8, wherein the cutting edge (44a, 44b) of the blade is spaced from the central axis of the central support (30c) by 0.1mm to 0.3mm.

10. The peeling device (10) according to any one of claims 1 to 9, wherein the base body (20) as well as the blade holder (23) are formed integral.

11. The peeling device (10) according to any one of claims 1 to 10, wherein the base body (20) and the blade holder (23) are made of plastic material.

12. The peeling device (10) according to any one of claims 1 to 11, wherein the outer supports (30a, 30c) and/or the central support (30c) are releasably coupled to the base body (20).

13. The peeling device (10) according to any one of claims 1 to 12, wherein the blade (42) is releasably coupled to the blade holder (42).

14. The peeling device (10) according to any one of claims 1 to 13, wherein the base body (20) comprises recesses (24a, 24b) on the free ends (21a, 21b) of the base body (20) formed on a surface (203) perpendicular to the inner surface (201) of the base body (20) and configured such that the base body (20) at least partially surrounds the outer supports (30a, 30b), preferably, wherein the recesses (24a, 24b) are formed on the side (203) of the base body (20) on which the blade (42) is mounted.

15. A system comprising:
a set of peeling devices (10) according to any one of claims 1 to 14, wherein the set of peeling devices (10) comprises a plurality of base bodies (20) of different sizes configured to peel cylindrical bodies (B) of varying outer diameters, and
a set of interchangeable blades (42) and supports (30a, 30b, 30c) configured to be releasably mounted to any one of the plurality of base bodies (20) of the set of peeling devices (10).
